# EUROPEAN PATENT APPLICATION

(11) **EP 2 182 093 A1**
(43) Date of publication of application: **05.05.2010**
(21) Application number: 08777720.7
(22) Date of filing: 30.06.2008
(51) Int. Cl.: C23C 28/00, B32B 15/08, C25D 5/10, C25D 5/12, C25D 5/50, C25D 7/00, H01R 13/03

(54) **METAL MATERIAL, METHOD FOR PRODUCING THE SAME, AND ELECTRICAL ELECTRONIC COMPONENT USING THE SAME**

(30) Priority: 29.06.2007 JP 2007173336
(71) Applicant: The Furukawa Electric Co., Ltd., Chiyoda-ku Tokyo 100-8322 (JP)
(72) Inventor: KOBAYASHI, Yoshiaki, Tokyo 100-8322 (JP); YOSHIDA, Kazuo, Tokyo 100-8322 (JP)
(74) Representative: Forstmeyer, Dietmar
(86) International application number: PCT/JP2008/061869
(87) International publication number: WO 2009/005042

(57) **Abstract**

A metal material (10), having an electrical conductive substrate 1; a surface layer 2 having tin or tin alloy formed on the electrical conductive substrate 1; and an organic coating 3 formed on the surface layer 2, organic coating 3 being formed with an organic compound including an ether linking group.

## Description

### Technical field

The present invention relates to a metal material, a method for producing the metal material and an electrical/electronic component using the same.

### Background art

In a metal material requiring conductivity, iron or iron alloy, and copper or copper alloy excellent in electrical conductivity have been used. However, recently, with increasing demands for improvement of contact property and the like, use of naked iron or iron alloy or copper or copper alloy is decreasing, while this substrate is used after being subjected to various surface treatments. Particularly, a plated material having a plated layer of tin (Sn) or alloy thereof on the conductive substrate has both of excellent conductivity and strength of the substrate and excellent electrical connectivity, corrosion resistance and solder property of the plated layer. Therefore, this plated material is widely used in various lead wires, electric contact points, terminals, connectors and the like. Particularly, a metal material having Sn or its alloy thereof is often used in lead wires, which need soldering, and connector terminals for vehicle harnesses.

For example, a conventionally used lead wire is mainly a linear electrical conductive substrate of copper or alloy thereof coated with Sn or alloy thereof by plating. This is used as a connection terminal through the use of excellent solder wetting property of Sn or alloy thereof.
In addition, it is also used as a connector terminal for a vehicle harness suitably. In an environment of high temperature such as an engine room of the vehicle, an oxidized coating is formed in the Sn-plated layer on the terminal surface as the Sn is easily oxidized. This oxidized coating is brittle and broken in connection of the terminal, and un-oxidized Sn-plated layer under the oxidized coating is exposed thereby achieving excellent electric connection.

Recently, with a progress in electronic controlling, a fitting-type connector becomes multipolar. When a male terminal is inserted into or withdrawn from a female terminal, much power is required. Particularly, in a narrow space such as an engine room of a vehicle, as the insertion and withdrawal operation is hard, the insertion and withdrawal force needs to be reduced significantly.
In order to reduce the insertion and withdrawal force, there is a method of making the Sn-plated layer on the connector terminal surface thinner thereby to reduce contact pressure between the terminals. However, as the Sn-plated layer is soft, there causes fretting phenomenon between the contact surfaces of the terminals, leading reduction in conduction between the terminals.

The fretting phenomenon is such that due to fine sliding between the contact surfaces of metal materials such as terminals caused by vibration and change in temperature, a soft plated layer on the surface of a terminal is worn and oxidized into abrasion powder of larger specific resistance value. With this phenomenon, conduction between the terminals is sometimes reduced. And, this phenomenon more easily occurs as the contact pressure is lower. Besides, when the metal material coated at the surface thereof with Sn or alloy thereof is packed and transported, for example, such a material as a lead wire or bar can be transported as wound into a coil. However, as the material is finely vibrated in the transportation step, there occurs the fretting phenomenon, and when it has arrived at the destination, the surface of Sn or alloy thereof is discolored due to the fretting phenomenon.

On the other hand, in order to prevent the fretting phenomenon, there is conventionally proposed a method of forming on an electrical conductive substrate Cu-Sn intermetallic compound layer of Cu₆Sn₅ or the like that is hard and hardly causes the fretting phenomenon (see Japanese Patent Application Laid-open Nos. 2000-212720 and 2000-226645).
In addition, In order to improve the sliding property, there are known various methods of optimizing the intermetallic compound layer by structure and plating thickness control, and there is known a plating material having a Ni layer between Cu-Sn intermetallic compound layers thereby to prevent diffusion of the substrate component (see Japanese Patent Application Laid-open No. 2004-68026).
Further, there is known another method of coating a surface-active agent or its solution on the plated metal material. The surface-active agent is known as acting as the lubricant or passivation agent (see Japanese Patent Application Laid-open Nos. 2004-323926 and 2007-84934).

### Disclosure of the invention

The inventors have tried to improve the sliding property and fretting resistance by studying the various plating ingredients like in the above-mentioned Japanese Patent Application Laid-open Nos. 2000-212720 and 2000-226645. However, in this method, the substrate element of Cu or the like is widely diffused in the Cu-Sn intermetallic compound layer and the Cu-Sn intermetallic compound layer sometimes becomes brittle. Further, in the material disclosed in the Japanese Patent Application Laid-open No. 2004-68026, no Sn layer or Cu layer is interposed between the Ni player and Cu-Sn intermetallic compound layer. Therefore, Ni, Cu and Sn are plated as layers in this order on the substrate, which is subjected to heat treatment while precisely adjusting the plating thickness of the plated layers in consideration of the stoichiometric ratios of Cu and Sn. This heat treatment has to be controlled to the last extremity. This needs much effort in manufacturing and further cause complication of the process with reduction in manufacturing efficiency, and therefore, there are concerns of increasing of the manufacturing costs. Besides, this method is not enough to basically prevent the above-mentioned fretting in transportation. Furthermore, as to the methods disclosed in the Japanese Patent Application Laid-open Nos. 2004-323926 and 2007-84934, even if these methods are applied, it is difficult to prevent corrosion in the plated layer and surface discoloring of the treated metal material. This seems to be because the surface-active agent contains a hydrophilic group and is linked to moisture in the atmosphere, acidic material and the like, which reacts with the plated metal material.

Thus, there is established no technique for realizing both of improved fretting resistance and corrosion resistance that can be said environmental resistance for the metal material, which needs to be addressed immediately.

Therefore, the present invention provides:
(1) a metal material comprising an electrical conductive substrate; a surface layer having tin or tin alloy formed on the electrical conductive substrate; and an organic coating formed on the surface layer, organic coating being formed with an organic compound including an ether linking group;
(2) the metal material according to (1), wherein the organic compound for forming the organic coating consists of the ether linking group and a hydrophobic group;
(3) the metal material according to (2), wherein the hydrophobic group comprises a hydrocarbon group;
(4) the metal material according to any one of (1) to (3), wherein the tin or the tin alloy comprises any one of tin, tin-copper alloy, tin-silver alloy, tin-zinc alloy, tin-lead alloy, tin-silver-copper alloy, tin-indium alloy, tin-bismuth alloy, and tin-silver-bismuth alloy
(5) the metal material according to any one of (1) to (4), further comprising at least one intermediate layer formed between the electrical conductive substrate and the surface layer, the intermediate layer comprising at least one of nickel or nickel alloy, cobalt or cobalt alloy, iron or iron alloy, and copper or copper alloy;
(6) the metal material according to (5), wherein the at least one intermediate layer comprises a first intermediate layer of nickel or nickel alloy and a second intermediate layer of copper or copper alloy formed in this order from a side of the electrical conductive substrate;
(7) a method for producing a metal material comprising the steps of: forming a surface layer comprising tin or tin alloy on a metal substrate into a Sn-plated metal material; heating the Sn-plated metal material to a temperature of at least one half of a melting point of the tin or tin alloy; subjecting the surface layer of the tin or tin alloy to a diffusion or fusion treatment; and forming an organic coating of an organic compound including an ether linking group on a surface of a heated Sn-plated metal material;
(8) the method according to (7), wherein the organic compound for forming the organic coating consists of the ether linking group and a hydrophobic group;
(9) the method according to (7) or (8), further comprising the step of forming an intermediate layer comprising a plating on the surface layer or between the surface layer and the metal substrate;
(10) an electrical/electronic component formed with the metal material according to any one of (1) to (6); and
(11) the electrical/electronic component according to (10), which is formed as a fitting-type connector or a contact piece.

The above-mentioned and other features and advantages of the present invention will be clarified from the following description with reference to the attached drawings appropriately.

### BRIEF DESCRIPTION OF THE DRAWINGS

Fig. 1 is a cross sectional view schematically illustrating a metal material according to an embodiment of the present invention;
Fig. 2 is a cross sectional view schematically illustrating a metal material according to another embodiment of the present invention; and
Fig. 3 is a side view of a plate and an indent schematically illustrating a fine sliding test.

### BEST MODE FOR CARRYING OUT THE INVENTION

A metal material of the invention is described in detail below.
The metal material of the invention has an electrical conductive substrate, a surface layer comprising tin (Sn) or tin alloy formed on the electrical conductive substrate, and an organic coating formed on the surface of the surface layer, which is formed with an organic compound including an ether linking group. The organic compound for forming the organic coating preferably consists of only the ether linking group (-O-) and a hydrophobic group. More specifically, the organic compound consisting of only the ether linking group and the hydrophobic group does not contain such group as non-ether linking group, and non-hydrophobic group, i.e., hydrophilic group such as hydroxyl group (-OH), carboxyl group (-COOH), amino group (-NH₂), sulfonate group (-SO₃H), mercapto group (-SH) or the like. In other words, the organic compound is not a surface-active agent. The hydrophobic group more preferably comprises a hydrocarbon group. The hydrocarbon group may be aliphatic hydrocarbon group or aromatic hydrocarbon group. The above-described preferable organic compound has hydrophobic property as a whole. The organic compound disposed as an organic coating on the surface of the tin or tin alloy plated metal material brings a large effect in improving the fretting resistance, and the corrosion resistance (preventing the corrosion by the substance presenting acidity or alkalinity when it is resolved in the water and the moisture in the atmosphere).

In the metal material of the invention, the material of the electrical conductive substrate is not specifically limited, as far as it is used as the substrate of the metal material, and may be, for example, copper (Cu) or copper (Cu) alloy, iron (Fe) or iron (Fe) alloy, nickel (Ni) or nickel (Ni) alloy, or aluminum (Al) or aluminum (Al) alloy. The shape of the electrical conductive substrate may be sheet, rod, wire, tube, strip, atypical strip or the like, and is not specifically limited as far as it is the shape used as the material for electrical/electronic component. The size of the electrical conductive substrate is not limited, however, when it is practically used as the substrate for a plate type terminal, the width of the hoop winding coil is preferably within a range of about 10 to 30 mm and the thickness thereof is preferably within a range of about 0.05 to 0.8 mm. Concerning the width of the material, when the metal material is manufactured, the material with a wider width than the above described width is prepared and then the material is cut so as to obtain the material with a desired width thereby improving the efficiency.

In the metal material of the invention, tin, tin-copper alloy, tin-silver alloy, tin-zinc alloy, tin-lead alloy, tin-silver-copper alloy, tin-indium alloy, tin-bismuth alloy, and tin-silver-bismuth alloy are listed as the tin or tin alloy forming the surface layer, for example. Among them, the tin, tin-copper alloy, tin-silver alloy, tin-lead alloy, tin-zinc alloy are preferable, and tin or tin-copper alloy are more preferable. In the present invention, an intermetallic compound of the tin and other metal in which the atomic number of the other metal is larger than the atomic number of the tin in the intermetallic compound (for example, Cu₆Sn₅ or the like) is included in the above described tin or tin alloy.

In the metal material of the present invention, an intermediate layer may be provided between the conductive substrate and the surface layer of tin (Sn) or alloy thereof, when necessary. The intermediate layer may be of nickel (Ni) or alloy thereof, cobalt (Co) or alloy thereof, iron (Fe) or alloy thereof, copper (Cu) or alloy thereof, or the like. Preferably, the intermediate layer is formed of nickel.
When the intermediate layer is provided, the intermediate layer is preferably made of two layers, which are a layer of nickel or alloy thereof and a layer copper or alloy thereof formed on the conductive substrate in this order. This is because, when as the intermediate layer, the layer of nickel or alloy thereof and the layer of copper or alloy thereof are formed on the conductive substrate in this order, the tin of the surface layer has a property of easily forming a compound with the copper and therefore, the Sn-Cu compound can be easily formed on the surface layer. The formed intermetallic compound is for example, Cu₆Sn₅, Cu₃Sn or the like. Stoichiometrically, the thickness of the compound or forming state can be adjusted by controlling the coating thickness of the Sn layer and the intermediate layer. Besides, when the Sn layer is made thicker than that of stoichiometry, the outermost surface layer is not completely the Sn alloy layer but pure Sn layer may remain.

The Sn or Sn alloy layer as the surface layer may be a layer entirely or partially coating the conductive substrate. Depending on the situation, also when the intermediate layer is provided, the surface layer may coat the substrate entirely or partially, and thus, coating can be controlled appropriately.

The Sn or Sn alloy coating layer as the surface layer formed on the conductive substrate has a thickness that is not limited specifically but preferably ranges from 0.1 to 5 µm.

When the surface layer is of Sn alloy, the alloy is not limited specifically as far as it contains Sn. However, the atomic ratio of Sn content is preferably in the range of 25% (25 at%) to 100% (100 at%) and more preferably in the range of 50% (50 at%) to 100% (100 at%). For an alloy of Sn and noble metal such as Sn-Ag alloy or the like, in consideration of cost and the like, the atomic ratio of Sn in the entire surface layer (sum of Sn alloy and other Sn alloy or pure Sn) is preferably 50% (50 at%) or more and its mass ratio is preferably 50% (50 mass%) or more.

As the method for producing the above-mentioned metal material, first the surface layer of Sn or alloy thereof is formed on the electrical conductive substrate to be a tin-plated metal material. Then, the tin-plated metal material is heated to a temperature of 1/2 or more of the melting point of the tin or alloy thereof, and the tin or alloy thereof of the surface layer is subjected to diffusion or fusion treatment. After that, the coating of the organic compound having an ether linking group is preferably formed on the surface of the heated tinplated metal material. This heating temperature is preferably obtained by (Tm x 1/2) to (Tm x 2) °C in which Tm is a melting point of the tin or alloy thereof used in the tin-plated metal material. The heating time is not limited as far as the tin-plated metal material is well subjected to diffusion or fusion, however, is preferably in the range of 0.1 second to 24 hours. Further, the atmosphere in hearting may be air but preferably an atmosphere of inert gas so as to prevent the tin-plated metal material from being oxidized.
Further, it is preferable that the surface layer of tin or alloy thereof and/or the intermediate layer between the metal substrate and the surface layer is formed by plating.

In the metal material of the present invention, the organic coating formed on the surface of the surface layer formed of Sn or alloy thereof is an organic coating formed from organic compound having an ether linking group. This organic coating has the ether linking group and is physically or chemically absorbed to the tin (Sn) or alloy thereof. With this absorption, the organic coating can exert its function with lubricating property effectively, is excellent in sliding property and for example, the insertion force of the multipolar connector can be reduced. Further, the metal material of the present invention can improve the corrosion resistance of the electrical/electronic component (protect the metal or plated surface from oxidation (rust)by the action of blocking oxygen and water, for example) and improve the fretting resistance dynamically. Furthermore, when necessary, it has wear resistance under relatively high pressure of about 1 N/mm² and therefore, it is excellent in sliding property and has corrosion resistance.
Here, in the metal material of the present invention, the organic coating has such a thickness that it does not cause insulation when it is in contact as a terminal, and therefore, electrical conductivity can be obtained. In the metal material of the present invention, the thickness of the organic coating is not limited specifically, but it is preferably in the range of 0.0001 to 0.1 µm and more preferably in the range of 0.0001 to 0.01 µm.

The organic compound having an ether linking group is, for example, an ether compound containing 5 to 40 carbon atoms and preferably, an ether compound containing 6 to 30 carbon atoms. Specific examples of the ether compound include ether linking group such as dipropyl ether, allyl phenyl ether, ethylisobutyl ether, ethylene glycol diphenyl ether, pentaphenyl ether, alkyl (for example, nonyl, eicosyl and the like) diphenylether and ether compound consisting of only hydrophobic group. Further, more preferably, the ether compound is an ether compound of which the molecular mass is 100 or more, with which the organic coating has a relatively higher boiling point, is excellent in heat resistance and can exert more preferable effects. The organic compound having an ether linking group may contain nitrogen atoms and sulfur atoms as far as the organic compound does not exhibit hydrophilic property as a whole.
In the present invention, the above-mentioned ether compound is preferably non-sulfur ether compound, more preferably nitrogenous hydrocarbon ether compound consisting of carbon atoms, oxygen atoms, hydrogen atoms and nitrogen atoms, and most preferably hydrocarbon ether compound (aliphatic ether compound and aromatic ether compound) consisting of carbon atoms, oxygen atoms and hydrogen atoms. The hydrocarbon ether compound is more preferably an ether compound containing no oxygen atom other than that in the ether linking group as illustrated above. Thus, as the ether compound used does not contain any sulfur atom, the sulfur corrosion in the electrical/electronic component can be prevented preferably.

The method of forming the organic coating preferably includes preparing an electrical conductive substrate, forming a surface layer of Sn or alloy thereof on the conductive layer to be a Sn-plated metal material, dipping the Sn-plated metal material in a solution containing an organic compound having the ether linking group and drying the Sn-plated metal material at temperatures of 25 to 70 °C, for example. Otherwise, the above-mentioned Sn-plated metal material is made to pass in a solution mist containing the organic compound, the solution is wiped with a wet cloth or the like and the metal material is dried thereby to easily form a desired organic coating.

The concentration of the organic compound having an ether linking group such as an ether compound or the like in the solution is not limited specifically but is preferably in the range of 0.01 to 10 mass% in which case the organic compound can be dissolved in a suitable solvent such as toluene, acetone, trichloroethane, commercial synthetic solvent (for example, NS clean 100 W). The temperature and time for forming of the organic coating is not limited specifically, however, in order to form a desired organic coating, dipping is performed at an ambient temperature (25°C) for 0.1 second or more (preferably, 0.5 to 10 seconds). In order to ensure the hydrophobic property of the organic coating, it is preferable that the content of hydrophilic impurities in the above-mentioned solvent is kept at an inevitable level and no hydrophilic impurities remain in the organic coating of the present invention. More preferably, the solvent does not contain any hydrophilic group in its molecules nor any hydrophilic impurity.

In this organic coating treatment, the organic coating of one kind may be formed two times or more, the organic coating may be formed with a compound liquid having two or more ether compounds two times or more, or these organic coatings may be formed by turns. However, in consideration of the number of steps and costs, the forming treatment may be performed at most three times.

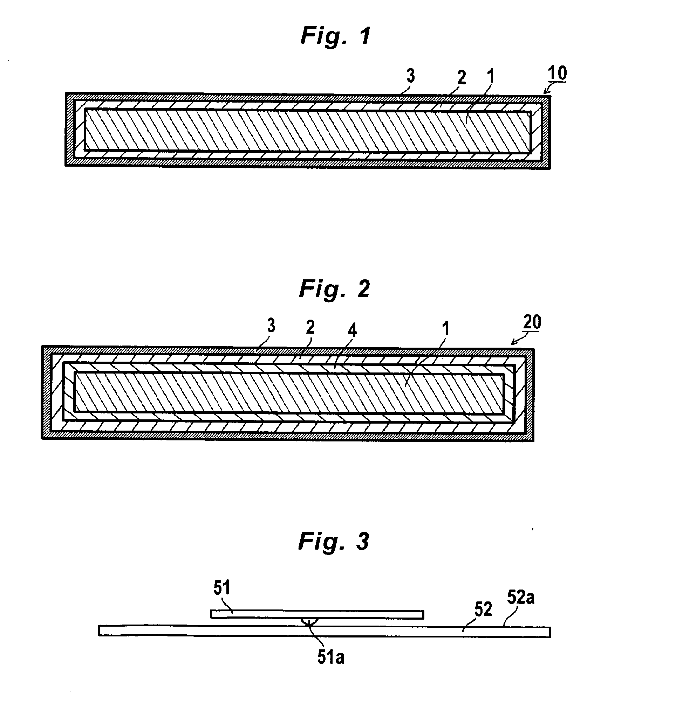

Fig. 1 is a cross sectional view schematically illustrating a metal material according to one embodiment of the present invention. In this metal material 10, a surface layer 2 of Sn or alloy thereof is formed on a plate-shaped electrical conductive substrate 1 and the surface of the surface layer 2 is coated with a layer 3 which is an organic coating formed of an organic compound having an ether linking group.
Fig. 2 is a cross sectional view schematically illustrating a metal material according to another embodiment of the present invention. In the metal material 20 of this embodiment, any intermediate layer 4 is first provided on the plate-shaped electrical conductive substrate 1, and the surface layer 2 of Sn or alloy thereof is formed on the intermediate layer 2. Then, the layer 3 of organic compound having the ether linking group is formed on the surface of the surface layer 2.
The metal material is not limited to those in the above-mentioned embodiments and may include two or more intermediate layers as described above.

The metal material of the present invention can be used as an electrical/electronic component and preferably as a fitting-type connector or terminal. At this time, the metal material of the present invention may be worked into a predetermined shape to be used as an electrical/electronic component or an electrical/electronic component combined with any other material.

The metal material of the present invention is excellent in corrosion resistance and sliding property, long in service life and exhibits excellent fretting resistance.
The metal material of the present invention can be used suitably for a long time in an electrical/electronic component such as a slide switch, a tact switch and the like.

### EXAMPLES

The present invention is further described in more detail with reference to examples. However, the examples are not intended for limiting the present invention.

### (Example 1)

First, a conductive substrate of a Cu-Zn alloy (CDA No. C26800) having a thickness of 0.3 mm and a width of 180 mm is subjected pretreatment of electrolytic degreasing and deoxidizing. Then, a coating of a metal or alloy shown in the item [Surface layer] of Table is formed on the substrate by plating. This is followed by subjecting the obtained plated metal material to the coating forming with an organic compound shown in the item [Organic coating] of Table 1, and test specimens 1 to 13 of the present invention and test specimens c1 to c7 for comparison are obtained as metal materials having an organic coating thickness of about 0.01 µm. Here, the Sn alloy in the example is subjected to adjustment of plating thickness based on the stoichiometry of the respective alloy components (in this description, so as to fall within the atomic ratio and mass ratio shown in the bottom note of Table 1), and to heat treatment on the conditions of 300°C x 15 minutes and in an atmosphere of nitrogen gas (purity 99.9%). Here, as the melting point of pure Sn is 232°C, this is a temperature that is 1/2 or more than the melting point of the heat treatment temperature.

### [Fine sliding test]

Each of the above-mentioned test specimens is subjected to the fine sliding test and evaluated. The above-mentioned fine sliding test is performed as follows:
As illustrated in Fig. 3, two metal material test specimens 51, 52 are prepared. The test specimen 51 (15 mm x 15 mm) is an indent and is provided with a shemispherical jutting part (indent jutting part) 51a having a curvature radius of 1.8 mm. This shemispherical 51a and a sliding surface 52a of the test specimen 52 (40 mm x 19 mm) as a plate are degreased and then brought into contact with each other with a contact pressure of 3N. In this state, both of them are slid back and forth at a temperature of 20°C and a humidity of 65%, for a sliding distance of 30 µm and 10000 times. The frequency of back-and-forth motion is about 3.3 Hz. In all measurements, the test specimens used as an indent and a plate are of the same combination (test specimens of same materials).
Thus, the fretting peak (appearance of a peak of contact resistance by fretting phenomenon) and the contact resistance after 10000-time sliding are measured and listed in Table 2.

In order to obtain the sliding property of each test specimen, a coefficient of dynamic friction is measured. As the measurement conditions, a steel-ball probe having a R (radius) of 3.0 mm of the measurement unit is brought into contact with a flat plate of the specimen with a load of 1N, the sliding distance is 10 mm, the sliding speed is 100 mm/sec, the sliding number of times is one for each one way, and the atmosphere is 65%Rh and 25°C. The measurement results of the coefficient of dynamic friction for one sliding for each way are given in Table 2.

Pretreatment conditions and plating conditions in producing of the above-mentioned test specimens are given below:
(Pretreatment conditions)
[Electrolytic degreasing]
   Degreasing solution: NaOH 60g/L
   Degreasing conditions: 2.5 A/dm², temperature 60°C, degreasing time 60 seconds
[Deoxidizing]
   Acid pickle: 10% sulfuric acid
   Pickling conditions: dipping for 30 seconds, ambient temperature (25°C)

(Plating conditions)
[Cu plating]
   Plating solution: CuSO₄ 5H₂O 250g/L, H₂SO₄ 50g/L, NaCL 0.1g/L
   Plating conditions: current density 6A/dm², temperature 40°C
[Ni plating]
   Plating solution: Ni(NH₂SO₃)₂ 4H₂O 500g/L, H₃BO₃ 30g/L, NiCl₂ 6H₂O 30g/L
   Plating conditions: current density 10A/dm², temperature 55°C
[Sn plating]
   Plating solution: SnSO₄ 80g/L, H₂SO₄ 80g/L
   Plating conditions: current density 2A/dm², temperature 25°C
[Ag plating]
   Plating solution: AgCN 50g/L, KCN 100g/L, K₂CO₃ 30g/L
   Plating conditions: current density 0.5 to 3A/dm², temperature 30°C
[Solder plating]
   Plating solution: SnHF 130g/L, PbHF 50g/L, HBF₄ 125g/L, peptone 5g/L
   Plating conditions: current density 2A/dm², temperature 25°C

The coating forming conditions are given below:
Dipping solution: 0.5 mass% ether compound solution (solvent toluene)
Dipping conditions: ambient temperature (25°C), dipped for 5 seconds
Drying: 40°C,30 seconds
Further, dipping as a comparative example is performed by preparing with a dipping solution consisting of toluene only and on the same conditions as mentioned above.

[Table 1]

**Table 1**

| | Surface layer | Organic coating |
|---|---|---|
| Test specimen 1 | pure Sn | pentaphenyl ether |
| Test specimen 2 | pure Sn | dipropyl ether |
| Test specimen 3 | pure Sn | allyl phenyl ether |
| Test specimen 4 | pure Sn | ethylisobutyl ether |
| Test specimen 5 | pure Sn | ethylene glycol diphenyl ether |
| Test specimen 6 | pure Sn | eicosyl diphenyl ether |
| Test specimen 7 | pure Sn | tetraphenyl ether |
| Test specimen 8 | pure Sn | triphenyl ether |
| Test specimen 9 | Cu₆Sn₅ | pentaphenyl ether |
| Test specimen 10 | Cu₃SN+Cu₆Sn₅ | pentaphenyl ether |
| Test specimen 11 | Ni-Sn solid solution | pentaphenyl ether |
| Test specimen 12 | Ag₃Sn+Sn | pentaphenyl ether |
| Test specimen 13 | solder (Pb-Sn) | pentaphenyl ether |
| Test specimen c1 | pure Sn | No |
| Test specimen c2 | Cu₆Sn₅ | No |
| Test specimen c3 | Cu₃SN+Cu₆Sn₅ | No |
| Test specimen c4 | Ni-Sn solid solution | No |
| Test specimen c5 | Ag₃Sn+Sn | No |
| Test specimen c6 | solder (Pb-Sn) | No |
| Test specimen c7 | pure Sn | toluene only |

| | | |
|---|---|---|
| (Note 1) "Cu₃SN+Cu₆Sn₅" in the test specimens 10 and c3 is a mixture of these two intermetallic compounds and the mass ratio of Sn over the surface layer is 50% or more (mass ratio of Sn is 51mass% here). (Note 2) "Ag₃Sn+Sn" in the test specimens 12 and c5 is a mixture of Ag₃Sn and Sn in the surface layer and the atomic ratio of Sn over the surface layer is 50% or more (atomic ratio of Sn is 51% here). The mass ratio of Sn is about 53.4 mass%. | | |

[Table 2]

**Table 2**

| | Fretting peak | Contact resistance after 10000 slidings (mΩ) | Dynamic friction coefficient |
|---|---|---|---|
| Test specimen 1 | no | 0.15 | 0.2 |
| Test specimen 2 | no | 0.15 | 0.2 |
| Test specimen 3 | no | 0.15 | 0.2 |
| Test specimen 4 | no | 0.15 | 0.2 |
| Test specimen 5 | no | 0.15 | 0.2 |
| Test specimen 6 | no | 0.15 | 0.2 |
| Test specimen 7 | no | 0.15 | 0.2 |
| Test specimen 8 | no | 0.15 | 0.2 |
| Test specimen 9 | no | 0.2 | 0.15 |
| Test specimen 10 | no | 0.2 | 0.15 |
| Test specimen 11 | no | 0.2 | 0.15 |
| Test specimen 12 | no | 0.15 | 0.15 |
| Test specimen 13 | no | 0.15 | 0.2 |
| Test specimen c1 | yes | 100 | 0.5 |
| Test specimen c2 | yes | 250 | 0.25 |
| Test specimen c3 | yes | 250 | 0.25 |
| Test specimen c4 | yes | 300 | 0.25 |
| Test specimen c5 | yes | 150 | 0.2 |
| Test specimen c6 | yes | 150 | 0.5 |
| Test specimen c7 | yes | 250 | 0.25 |

As is clear from Table 2, for the test specimens 1 to 13 of the present invention that are subjected to predetermined coating treatment, the fretting peak is not shown even after 10000-time sliding and the contact resistance is 0.2 mΩ or less with extreme stability. This confirms that they are excellent in fretting resistance, low in dynamic friction coefficient and excellent in sliding property.
Meanwhile, for the test specimens c1 to c7 for comparison, the contact resistance after 10000-time sliding is higher and the fretting peak is shown. Besides, the dynamic friction coefficient is higher as a whole. This means that they are not suitable for practical metal material for electrical/electronic components.
Furthermore, in the specimen treated with only toluene solvent for comparison (test specimen c7), the above-mentioned fretting resistance and sliding property are low. On the other hand, it is found that the metal material of the present invention with predetermined organic coating formed therein exhibits excellent effects.

### (Example 2)

First, a conductive substrate of a Cu-Zn alloy (CDA No. C52100) having a thickness of 0.25 mm and a width of 100 mm is subjected pretreatment of electrolytic degreasing and deoxidizing. Then, a coating of a metal or alloy shown in the item [Intermediate layer] of Table 3 is formed on the substrate by plating. The thickness of the coating is 0.2 µm. Here, when two intermediate layers are formed, they are formed in the order of the first layer/the second layer and each of them has a thickness of 0.1 µm, which are shown in Table 3. On the intermediate layer, a coating of a metal or alloy shown in the item [Surface layer] is formed on the intermediate layer by plating into a metal material. This is followed by subjecting the obtained plated metal material to the coating forming with an organic compound shown in the item [Organic coating] of Table 3, and test specimens 14 to 17 of the present invention and test specimens c8 to c10 for comparison are obtained as metal materials having an organic coating thickness of about 0.01 µm. Here, the Sn alloy in the example is subjected to adjustment of plating thickness based on the stoichiometry of the respective alloy components and to heat treatment on the conditions of 300°C x 15 minutes and in an atmosphere of argon gas (purity 99.9%) thereby to be alloyed completely. Here, as the melting point of pure Sn is 232°C, this is a temperature that is 1/2 or more than the melting point of the heat treatment temperature.
The plating conditions and organic coating forming conditions are the same as those mentioned above.

For each of the above-mentioned metal material test specimens, the sliding test and dynamic friction coefficient measurement test are performed like in the example 1. The results are shown in Table 4.

[Table 3]

**Table 3**

| | Surface layer | Intermediate layer | Organic coating |
|---|---|---|---|
| Test specimen 14 | pure Sn | nickel | pentaphenyl ether |
| Test specimen 15 | pure Sn | copper | pentaphenyl ether |
| Test specimen 16 | pure Sn | nickel/copper | pentaphenyl ether |
| Test specimen 17 | Cu₆Sn₅* | nickel/copper | pentaphenyl ether |
| Test specimen c8 | pure Sn | nickel | No |
| Test specimen c9 | Cu₆Sn₅^{*} | nickel/copper | No |
| Test specimen c10 | pure Sn | nickel | toluene only |

| | | | |
|---|---|---|---|
| *The Cu₆Sn₅ alloy is obtained by adjusting the coating thickness stoichiometrically and diffusing the copper base completely. | | | |

[Table 4]

**Table 4**

| | Fretting peak | Contact resistance after 10,000 slidings (mΩ) | Dynamic friction coefficient |
|---|---|---|---|
| Test specimen 14 | no | 0.15 | 0.2 |
| Test specimen 15 | no | 0.15 | 0.2 |
| Test specimen 16 | no | 0.15 | 0.2 |
| Test specimen 17 | no | 0.2 | 0.15 |
| Test specimen c8 | yes | 100 | 0.5 |
| Test specimen c9 | yes | 250 | 0.25 |
| Test specimen c10 | yes | 100 | 0.5 |

As is clear from Table 4, for the test specimens of the present invention that are subjected to predetermined coating treatment, the fretting peak is not shown even after 10000-time sliding and the contact resistance is 0.2 mΩ or less with extreme stability. This confirms that they are excellent in fretting resistance, low in dynamic friction coefficient and excellent in sliding property like in the example 1.
In addition, according to the present invention, even the metal material having the nickel layer and the copper layer formed in this order on the conductive substrate as the intermediate layers shows excellent effects in fretting resistance and sliding property. This means that according to the present invention, it is possible to obtain a metal material with a stable surface layer of desired Sn alloy without any special treatment or complicated process, drastically improving the manufacturing efficiency and making a significant contribution to reduction in manufacturing cost.

### INDUSTRIAL APPLICABILITY

The metal material of the present invention having Sn or alloy thereof coated as the surface layer is excellent in corrosion resistance and sliding property, long in service life and suitable for use in electrical/electronic components with improved fretting resistance. An electrical/electronic component of the present invention using this metal material is suitably used in a fitting-type connector or terminal. Further, the method for producing the metal material of the present invention is suitable as a method of providing the above-mentioned metal material and electrical/electronic component at low cost and efficiently.

The present invention has been described by way of its embodiments. The present invention is not limited by any detail of the description unless otherwise specified, and shall be interpreted broadly without departing from the spirit and scope of the invention defined in the following claims.

The present application claims a priority to the Japanese Patent Application No. 2007-173336 filed on June 29, 2007, which is incorporated by reference herein.

## Claims

1. A metal material comprising an electrical conductive substrate; a surface layer having tin or tin alloy formed on the electrical conductive substrate; and an organic coating formed on the surface layer, organic coating being formed with an organic compound including an ether linking group.

2. The metal material according to claim 1, wherein the organic compound for forming the organic coating consists of the ether linking group and a hydrophobic group.

3. The metal material according to claim 2, wherein the hydrophobic group comprises a hydrocarbon group.

4. The metal material according to any one of claims 1 to 3, wherein the tin or the tin alloy comprises any one of tin, tin-copper alloy, tin-silver alloy, tin-zinc alloy, tin-lead alloy, tin-silver-copper alloy, tin-indium alloy, tin-bismuth alloy, and tin-silver-bismuth alloy.

5. The metal material according to any one of claims 1 to 4, further comprising at least one intermediate layer formed between the electrical conductive substrate and the surface layer, the intermediate layer comprising at least one of nickel or nickel alloy, cobalt or cobalt alloy, iron or iron alloy, and copper or copper alloy.

6. The metal material according to claim 5, wherein the at least one intermediate layer comprises a first intermediate layer of nickel or nickel alloy and a second intermediate layer of copper or copper alloy formed in this order from a side of the electrical conductive substrate.

7. A method for producing a metal material comprising the steps of:
forming a surface layer comprising tin or tin alloy on a metal substrate into a Sn-plated metal material;
heating the Sn-plated metal material to a temperature of at least one half of a melting point of the tin or tin alloy;
subjecting the surface layer of the tin or tin alloy to a diffusion or fusion treatment; and
forming an organic coating of an organic compound including an ether linking group on a surface of a heated Sn-plated metal material.

8. The method according to claim 7, wherein the organic compound for forming the organic coating consists of the ether linking group and a hydrophobic group.

9. The method according to claim 7 or 8, further comprising the step of forming an intermediate layer comprising a plating on the surface layer or between the surface layer and the metal substrate.

10. An electrical/electronic component formed with the metal material according to any one of claims 1 to 6.

11. The electrical/electronic component according to claim 10, which is formed as a fitting-type connector or a contact piece.
